**Europäisches Patentamt**

**European Patent Office**

**Office européen des brevets**

(19)

(11) Veröffentlichungsnummer: **0 017 087**
**A2**

(12) **EUROPÄISCHE PATENTANMELDUNG**

(21) Anmeldenummer: **80101443.2**

(22) Anmeldetag: **19.03.80**

(51) Int. Cl.³: **G 02 F 1/19**

(30) Priorität: **21.03.79 DE 2911087**

(43) Veröffentlichungstag der Anmeldung:
**15.10.80 Patentblatt 80/21**

(84) Benannte Vertragsstaaten:
**CH FR GB IT NL**

(71) Anmelder: **SIEMENS AKTIENGESELLSCHAFT Berlin und München**
**Postfach 22 02 61**
**D-8000 München 22(DE)**

(72) Erfinder: **Baur, Günter, Dr. rer. nat., Dipl.-Phys.**
**Waldhofstrasse 8d**
**D-7800 Freiburg(DE)**

(72) Erfinder: **Kohlmüller, Hans, Ing. grad.**
**Fr.-Bauer-Strasse 1**
**D-8520 Erlangen(DE)**

(72) Erfinder: **Krüger, Hans, Dipl.-Phys.**
**Peralohstrasse 13**
**D-8000 München 83(DE)**

(54) **Darstellungsverfahren und Anzeigevorrichtung zur Durchführung dieses Verfahrens.**

(57) Die Erfindung geht aus von einem Verfahren zur optischen Darstellung von Informationen, bei dem in einem Fluoreszenzkörper Umgebungslicht eingefangen und an ausgewählten Stellen wieder ausgekoppelt wird, und zwar dadurch, daß durch Anlegen einer elektrischen Spannung reflektierende Schichten in optischen Kontakt mit dem Fluoreszenzkörper gebracht werden.

Erfindungsgemäß wird vorgeschlagen, diese Reflexionsschichten dadurch zu erzeugen, daß man aus einer Flüssigkeit einen Niederschlag abscheidet. Dieser Neiderschlag wird vorzugsweise durch eine elektrochemische Reaktion aus einem Elektrolyten gewonnen und ist normalerweise entweder ein Metall wie Silber oder eine (organische) elektrochrome Schicht.

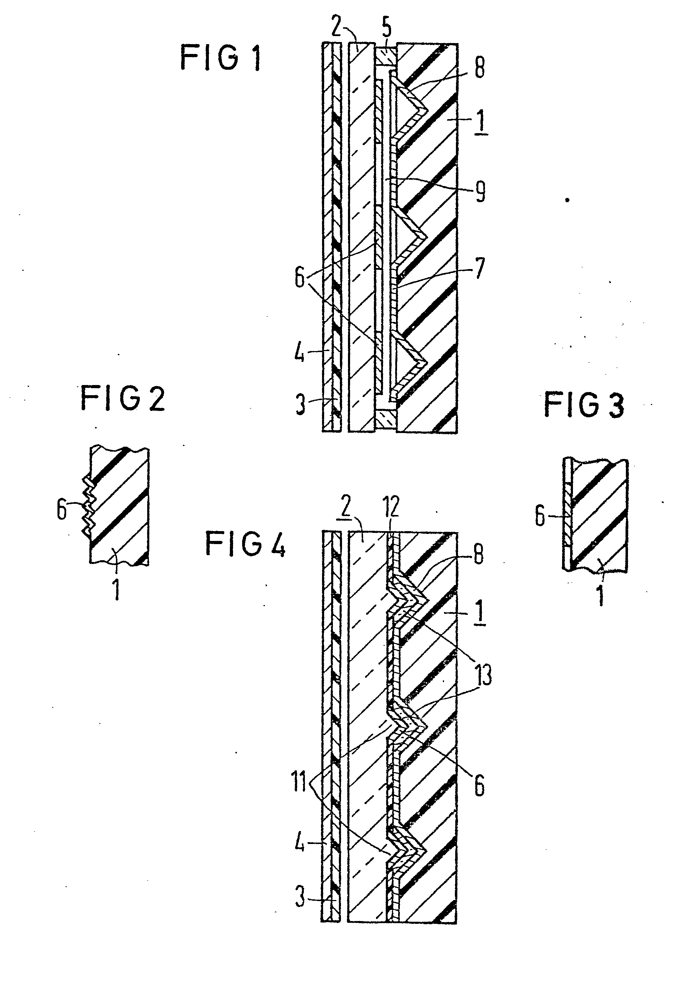

Das vorgeschlagene Verfahren ermöglicht eine Lichtausbeute von über 90‰, gestattet eine zeitlich unbegrenzte, sofort löschbare Speicherung der eingegebenen Information und gibt keine konstruktiven Probleme auf (Figur 1).

FIG 1

SIEMENS AKTIENGESELLSCHAFT          . Unser Zeichen
Berlin und München                    VPA  79 P 8 0 1 3 EUR

Darstellungsverfahren und Anzeigevorrichtung zur
Durchführung dieses Verfahrens.

Die Erfindung betrifft eine Darstellungstechnik gemäß
dem Oberbegriff des Anspruchs 1 und bezieht sich
außerdem auf ein Display, mit dem diese Technik durchgeführt werden kann. Ein solches Anzeigesystem ist
aus der DE-OS 26 13 891 bekannt.

Displays, die kein eigenes Licht erzeugen sondern nur
das Licht der Umgebung modulieren, müssen dann, wenn
sie auch unter ungünstigen Helligkeitsverhältnissen
anzeigen sollen, mit einer Zusatzbeleuchtung ausgerüstet werden. Diese Lichtquelle verbraucht in aller
Regel Strom und stellt daher einen der wesentlichen
Vorzüge einer passiven Anzeigevorrichtung - den extrem
geringen Leistungsbedarf - infrage. Man ist daher
seit jeher um die Realisierung eines Displaytyps bemüht, der mit möglichst wenig künstlichem Licht auskommt.

Les 1 Nem/19.03.1979

Auf diesem Weg ist man mit der Entwicklung des sogenannten "fluoreszenzaktivierten Displays" (FLAD) einen
großen Schritt vorangekommen. Bei einem FLAD befindet
sich hinter einem Lichtventil, das bereichsweise
zwischen einem lichtdurchlässigen und einem lichtsperrenden Zustand geschaltet werden kann, eine "Fluoreszenzplatte". Diese Platte enthält einen Fluoreszenzstoff, ist an ihren vier Schmalseiten verspiegelt und
hat auf ihrer Rückseite Kerben, die jeweils mit einem
der schaltbaren Ventilbereiche fluchten. Die Fluoreszenzplatte sammelt einen Großteil des auf sie treffenden Umgebungslichts durch Fluoreszenzstreuung und
nachfolgende (Total-)Reflexionen an ihren Grenzflächen,
leitet diese Strahlung in ihrem Inneren fort und
koppelt sie mit erhöhter Intensität an den Kerben nach
vorn aus. Der Helligkeitsverstärkungsfaktor der Fluoreszenzplatte ist in erster Näherung gegeben durch
das Verhältnis der lichtsammelnden zur lichtabgebenden Plattenfläche. Nähere Einzelheiten über den Aufbau
und die Wirkungsweise eines FLAD's können der DE-OS
25 54 226 entnommen werden.

Die geschilderte FLAD-Version verfügt zweifellos über
gute optische Qualitäten, hat aber noch keinen besonders hohen Wirkungsgrad: Die Fluoreszenzplatte wird
zum Teil von dem Lichtventil abgedeckt und hat daher
nur eine relativ kleine Kollektorfläche; es werden
stets alle schaltbaren Ventilbereiche mit Fluoreszenzlicht versorgt, also auch diejenigen Bereiche, die
gesperrt sind und somit das auftreffende Licht vernichten; die bisher verwendeten Ventile arbeiten mit
Polarisatoren, die durchgehendes Licht erheblich
schwächen. Diese Verluste ergeben eine nur mäßige
Lichtausbeute von etwa 30%.

Das Aufhellungsvermögen der Fluoreszenzplatte wird besser genutzt, wenn man, wie in der eingangs zitierten Offenlegungsschrift beschrieben, auf ein Lichtventil verzichtet und statt dessen das in der Fluoreszenzplatte gefangene Licht nur an ausgewählten Stellen auskoppelt. Gemäß der genannten Literaturstelle kann dies auf zweierlei Weise geschehen: Entweder wird eine Membran durch elektrische Kräfte bewegt oder man variiert durch eine geeignete Polarisierung die Dicke einer ferroelektrischen Keramikplatte. Beide Varianten liefern nicht nur eine lichtstarke Darstellung, sondern ermöglichen auch eine Informationsspeicherung, sind aber nicht einfach zu realisieren: Sie verlangen flüssige Kontaktfilme und spezielle Abstandstechniken, lassen nur Streuwinkelverteilungen in gewissen Grenzen zu und sind überdies verschleißgefährdet (Membran) oder nur mit relativ hohen Spannungen zu schalten (ferroelektrische Keramik).

Der Erfindung liegt daher die Aufgabe zugrunde, das Verfahren der eingangs genannten Art so weiterzuentwickeln, daß es sich mit einem einfach aufgebauten Display durchführen läßt, dabei die Verstärkungseigenschaften der Fluoreszenzplatte voll zur Geltung bringt und einen Speichereffekt hat. Diese Aufgabe wird erfindungsgemäß durch eine Technik mit den Merkmalen des Patentanspruchs 1 gelöst.

Das vorgeschlagene Verfahren kommt ohne einen besonderen Kontaktvermittler zwischen dem Fluoreszenzkörper und der Streuschicht aus, ist frei von mechanisch bewegten Teilen und verlangt keine besonderen Distanziermaßnahmen. Von Vorteil ist außerdem, daß der optische Kontakt auch dann gewahrt bleibt, wenn der Niederschlag auf einer rauhen Oberfläche oder in einer Vertiefung abgeschieden wird; denn so kann man die Streucharakteristik der ausgekoppelten Strahlung bequem variieren und auf die Erfordernisse des Einzelfalles abstimmen. Der einmal erzeugte Niederschlag bleibt auch nach Wegnahme der Spannung bestehen, läßt sich jedoch durch Anlegen einer Gegenspannung sofort wieder auflösen.

Normalerweise wird man den Niederschlag durch eine elektrochemische Reaktion aus einem flüssigen Elektrolyten gewinnen. Dabei empfiehlt es sich, entweder eine metallische, etwa aus Silber, Gold oder Nickel bestehende Schicht oder eine (organische) elektrochrome Schicht, beispielsweise eine Viologenverbindung abzuscheiden.

Der Niederschlag könnte aber auch auf andere Weise erzeugt werden. So kommen insbesondere auch Techniken unter Ausnutzung des Elektrophorese-Effekts infrage. Hierbei erhält die Flüssigkeit elektrisch geladene Teilchen, die sich bei Anlegen einer Spannung an einer der Elektroden sammeln. Eine solche Suspension muß so beschaffen sein, daß das Fluoreszenzlicht von der Trägerflüssigkeit absorbiert bzw. hindurchgelassen wird und von den Partikeln gestreut wird.

Hat der Niederschlag eine Reflexionsfarbe, die von der Eigenfarbe der Fluoreszenzplatte etwas abweicht, dann wird zwar nicht mehr alles Fluoreszenzlicht genutzt, aber man erhält eine besonders kontrastreiche Darstellung.

Weitere vorteilhafte Ausgestaltungen und Weiterbildungen der Erfindung sind Gegenstand besonderer Ansprüche.

Der Lösungsvorschlag soll nun anhand bevorzugter Ausführungsbeispiele in Verbindung mit den Figuren der Zeichnung näher erläutert werden. In den Figuren sind einander entsprechende Teile mit gleichen Bezugszeichen versehen. Es zeigen:

Fig. 1 in einem Seitenschnitt ein erstes Display, mit dem das erfindungsgemäße Verfahren durchgeführt werden kann,

Fig. 2 einen Ausschnitt einer weiteren Ausführungsform, ebenfalls in einem Seitenschnitt,

Fig. 3 in der gleichen Darstellungsweise wie Fig. 2 ein drittes Ausführungsbeispiel und

Fig. 4 eine vierte Displayvariante, wiederum in einem Seitenschnitt.

In den Figuren sind für ein Verständnis der Erfindung nicht unbedingt erforderliche Einzelteile eines Displays, beispielsweise die elektrischen Zuleitungen, der Übersicht halber nicht eingezeichnet.

Das Display der Fig. 1 enthält im einzelnen eine Fluoreszenzplatte 1, eine dünne Rückplatte 2, eine Filterfolie 3 und einen Reflektor 4. Die Teile sind in der Reihenfolge ihrer Aufzählung in Betrachtungsrichtung hintereinander angeordnet. Die beiden Platten 1 und 2 sind über einen Rahmen 5 in einem möglichst geringen Abstand dicht miteinander verbunden und tragen auf ihren einander zugewandten Innenseiten jeweils elektrisch leitende Beläge. Der Belag der Rückplatte 2 besteht aus getrennt ansteuerbaren Segmenten (Segmentelektroden 6), der Belag der Fluoreszenzplatte 1 dient als Gegenelektrode 7. Die Segmentelektroden liegen jeweils einer Kerbe 8 gegenüber, die in die Rückseite der Fluoreszenzplatte 1 eingebracht ist und sich mit den übrigen Kerben in üblicher Weise zu einer "8" ergänzt. Die durch die beiden Platten und den Rahmen begrenzte Kammer ist mit einem flüssigen, transparenten Elektrolyten 9 gefüllt, der etwa den gleichen Brechungsindex wie die Fluoreszenzplatte 1 hat. Die Filterfolie 3 fungiert als Hochpaßfilter, sie läßt das Anregungslicht für den Fluoreszenzstoff der Fluoreszenzplatte 1 hindurch und absorbiert das Fluoreszenzlicht.

Für die einzelnen Displayteile sind im vorliegenden Fall folgende Substanzen gewählt: Die Fluoreszenzplatte 1 besteht aus Polymethylmethacrylat, der darin gelöste Fluoreszenzstoff ist eine Substanz, die von der Firma Riedel-de Häen unter der Bezeichnung "K1" angeboten wird, als Elektroden dienen transparente $In_2O_3$-Schichten, und der Elektrolyt ist eine $AgNO_3$-Lösung.

Die Anzeigevorrichtung arbeitet folgendermaßen: Im ausgeschalteten Zustand sind die Kerben optisch nicht existent, so daß das Fluoreszenzlicht in dem aus den Platten und dem Elektrolyten bestehenden System eingeschlossen bleibt. Steuert man eine der Segmentelektroden an, so wird die zugehörige Kerbe mit einem Silberfilm überzogen und bildet nun ein hochreflektierendes Lichtaustrittsfenster. Bei Anlegen einer Gegenspannung verschwindet der Niederschlag restlos. Die benötigten Schaltspannungen liegen bei etwa 3 V, die Schaltzeiten bewegen sich in der Größenordnung von 0,1 sec.

Wollte man mit einem erfindungsgemäßen Display einen Kontrast erreichen, der dem einer elektrochromen Anzeige entspricht, dann muß das ausgekoppelte Fluoreszenzlicht so hell wie Standardweiß bei gleichen Umgebungsbedingungen sein. (Die Helligkeit ergibt sich durch Integration über die Augenempfindlichkeitskurve.) Arbeitet man mit dem Fluoreszenzstoff K1, dann ist die genannte Bedingung bei normalem Tageslicht ($6000°K$) erfüllt, wenn das Verhältnis zwischen der licht-

0017087

sammelnden Fläche und der größten Auskoppelfläche 4:1 beträgt. Bei einer Lichttemperatur von 3000°K (Kunstlicht) muß das Flächenverhältnis 9:1 groß sein.

Die Ausführungsbeispiele, von denen in den Figuren 2 und 3 Einzelheiten dargestellt sind, unterscheiden sich von der Ausführung der Fig. 1 lediglich darin, daß die Segmentelektroden 6 statt in Kerben auf aufgerauhten bzw. glatten Oberflächenbereichen der Fluoreszenzplatte 1 aufgetragen sind.

Die Variante der Fig. 4 weicht vom Ausführungsbeispiel der Fig. 1 vor allem darin ab, daß sich die Flüssigkeit nur in den Kerben befindet und daß die Kerben jeweils durch eingepaßte Keile 11 verschlossen werden. Die Keile gehen von der Rückplatte 2 aus, die ihrerseits über eine elektrisch isolierende, transparente Kleberschicht 12 mit der Fluoreszenzplatte 1 verbunden ist. Die Flüssigkeit ist eine Suspension 13 aus einem schwarzen Trägermedium und darin enthaltenen weißen Teilchen. Wird eine der Segmentelektroden 6 angesteuert, so lagern sich an der betreffenden Elektrode die - elektrisch geladenen - Partikel ab, und die zuvor lichtabsorbierende Kerbenwand wird streuend.

Die Suspension könnte auch folgendermaßen zusammengesetzt sein: die Trägerflüssigkeit ist transparent und hat einen deutlich höheren Brechungsindex als die Fluoreszenzplatte. Die Teilchen sind ebenfalls durchsichtig und sind ähnlich optisch dicht wie der Träger (Beispiel: die Brechungsindizes der Fluoreszenzplatte, der Flüssigkeit und der Partikel haben Werte von 1,5 bzw. 1,8 bzw. 1,9). In diesem Fall treten der Träger und die im Inneren der Flüssigkeit befindlichen Teilchen optisch nicht in Erscheinung, während die Teilchen, die an der Elektrode gesammelt sind, als Streuzentren wirken.

Das vorgeschlagene Verfahren läßt ohne weiteres auch eine mehrfarbige Anzeige zu. Man braucht lediglich das Display in mehrere nebeneinander- und/oder hintereinanderliegende Abschnitte zu unterteilen, wenn man Bilder erzeugen will, die an verschiedenen und/oder den gleichen Orten unterschiedlich gefärbte Bestandteile haben. Besonders wenig Mehraufwand kostet es, wenn man die einzelnen Displayabschnitte mit Flüssigkeiten versieht, deren Niederschläge selbst fluoreszieren bzw. selbst farbselektiv umlenken.

Die Erfindung ist nicht auf die dargestellten Beispiele beschränkt. Vor allem in konstruktiver Hinsicht besteht noch ein erheblicher Spielraum. So wird der Fluoreszenzkörper zwar vorwiegend eine Platte mit verspiegelten Seitenflächen sein und auf seiner Rückseite mit dem Niederschlag kontaktiert werden; denkbar sind aber auch andere Körperformen (DE-OS 27 24 748) und/oder Lichtaustrittsfenster auf der Körpervorderseite (DE-OS 25 54 226).

4 Figuren
17 Patentansprüche

VPA 79 P 8 0 1 3 EUR

0017087

Patentansprüche

1. Verfahren zur optischen Darstellung von Informationen, bei dem

a) ein Körper (Fluoreszenzkörper) verwendet wird, der aus einem Material mit einem Brechungsindex größer 1 besteht, fluoreszierende Partikel enthält und auftreffendes Licht durch Fluoreszenzstreuung und nachfolgende Reflexionen an seinen Grenzflächen sammelt,

b) zum Einschreiben der Information an ausgewählten Stellen des Fluoreszenzkörpers durch Anlegen einer Spannung eine den Fluoreszenzkörper optisch kontaktierende Fläche (Umlenkfläche) geschaffen wird, die das Fluoreszenzlicht aus dem Fluoreszenzkörper auskoppelt, und

c) zum Löschen der eingeschriebenen Information durch Anlegen einer Gegenspannung die Umlenkfläche wieder entfernt wird,

d a d u r c h   g e k e n n z e i c h n e t ,   daß die Umlenkschicht

d) durch Erzeugung eines Niederschlags aus einer Flüssigkeit geschaffen wird und

e) durch Beseitigung dieses Niederschlags wieder entfernt wird.

2. Verfahren nach Anspruch 1, d a d u r c h   g e k e n n z e i c h n e t ,   daß der Niederschlag elektrochemisch aus einem Elektrolyten erzeugt wird.

3. Verfahren nach Anspruch 2, d a d u r c h   g e k e n n z e i c h n e t ,   daß der Niederschlag metallisch ist und insbesondere aus Silber, Gold oder Nickel besteht.

VPA 79 P 8 0 1 3 EUR

0017087

4. Verfahren nach Anspruch 2, d a d u r c h g e - k e n n z e i c h n e t , daß der Niederschlag aus einem insbesondere organischen elektrochromen Material besteht.

5. Verfahren nach Anspruch 1, d a d u r c h g e - k e n n z e i c h n e t , daß die Flüssigkeit eine Suspension ist und der Niederschlag durch Transport der suspendierten Teilchen erzeugt wird.

6. Verfahren nach Anspruch 5, d a d u r c h g e - k e n n z e i c h n e t , daß die Suspension aus einer schwarzen Flüssigkeit besteht und die suspendierten Teilchen weiß sind.

7. Verfahren nach Anspruch 5, d a d u r c h g e - k e n n z e i c h n e t , daß die Flüssigkeit und die suspendierten Teilchen transparent sind und höhere, untereinander gleiche Brechungsindizes als die Fluoreszenzplatte haben.

8. Verfahren nach Anspruch 7, d a d u r c h g e - k e n n z e i c h n e t , daß die Brechungsindizes der Fluoreszenzplatte, der Flüssigkeit und der suspendierten Teilchen Werte von etwa 1,5 bzw. 1,8 bzw. 1,9 haben.

9. Verfahren nach einem der Ansprüche 1 bis 8, d a - d u r c h g e k e n n z e i c h n e t , daß der Niederschlag auf der vom Betrachter abgewandten Seite des vorzugsweise plattenförmigen Fluoreszenzkörpers erzeugt wird.

10. Verfahren nach einem der Ansprüche 1 bis 9, d a - d u r c h g e k e n n z e i c h n e t , daß der Niederschlag in Kerben erzeugt wird, die in die Ober-

0017087

fläche des Fluoreszenzkörpers eingebracht sind.

11. Verfahren nach einem der Ansprüche 1 bis 9, d a -
d u r c h   g e k e n n z e i c h n e t , daß der
Niederschlag auf einer aufgerauhten Stelle der Oberfläche des Fluoreszenzkörpers erzeugt wird.

12. Verfahren nach einem der Ansprüche 1 bis 11, d a -
d u r c h   g e k e n n z e i c h n e t , daß der
Niederschlag nur einen Teil des Fluoreszenzlichtspektrums nach vorn umlenkt.

13. Anzeigevorrichtung zur Durchführung des Verfahrens
nach einem der Ansprüche 1 bis 12, d a d u r c h
g e k e n n z e i c h n e t , daß der Fluoreszenzkörper die Form einer Platte (Fluoreszenzplatte 1)
mit verspiegelten Seitenflächen hat, daß in Betrachtungsrichtung hinter der Fluoreszenzplatte (1) eine
Rückplatte (2) angeordnet ist, die über einen Rahmen
(5) mit der Fluoreszenzplatte (1) verbunden ist, daß
die beiden Platten (1, 2) auf ihren einander zugewandten
Innenseiten jeweils mit elektrisch leitenden Belägen
(Segmentelektroden 6, Rückelektrode 7) versehen sind,
von denen zumindest der Fluoreszenzplattenbelag segmentiert und lichtdurchlässig ist, und daß die Flüssigkeit (9) die vom Rahmen (5) und den beiden Platten
(1, 2) begrenzte Kammer ausfüllt und einen wenigstens
angenähert gleichen Brechungsindex wie die Fluoreszenzplatte (1) hat.

14. Anzeigevorrichtung nach Anspruch 13, d a d u r c h
g e k e n n z e i c h n e t , daß die Fluoreszenzplatte (1) mindestens um das 5-fache dicker ist als
die Rückplatte (2) und der Rahmen (5) zusammengenommen.

VPA 79 P 8 0 1 3 EUR

15. Anzeigevorrichtung zur Durchführung eines Verfahrens nach einem der Ansprüche 1 bis 12, d a - d u r c h g e k e n n z e i c h n e t , daß der Fluoreszenzkörper auf seiner vom Betrachter abgewandten Seite mit Kerben (8) versehen ist, daß die Kerben (8) jeweils durch einen Keil (11) abgeschlossen sind, daß die Kerben (8) und die Keile (11) jeweils mit einem elektrisch leitenden Belag beschichtet sind und daß zwischen den beschichteten Kerben (8) und Keilen (11) jeweils ein Spalt verbleibt, der von der Flüssigkeit (13) ausgefüllt wird.

16. Anzeigevorrichtung nach einem der Ansprüche 13 bis 15, g e k e n n z e i c h n e t d u r c h ein die Vorrichtung nach hinten abschließendes Filter (3), das das Anregungslicht für die fluoreszierenden Partikel passieren läßt, das Fluoreszenzlicht dagegen sperrt.

17. Anzeigevorrichtung nach Anspruch 16, d a d u r c h g e k e n n z e i c h n e t , daß sich hinter dem Filter (3) noch ein Reflektor (4) befindet.

0017087

FIG 1

FIG 2

FIG 3

FIG 4